(19) Europäisches Patentamt
European Patent Office
Office européen des brevets

(11) **EP 1 522 847 B1**

(12) **EUROPÄISCHE PATENTSCHRIFT**

(45) Veröffentlichungstag und Bekanntmachung des Hinweises auf die Patenterteilung:
**04.03.2009  Patentblatt 2009/10**

(51) Int Cl.:
***G01N 23/20*** (2006.01)  ***G01N 23/223*** (2006.01)

(21) Anmeldenummer: **04022630.0**

(22) Anmeldetag: **23.09.2004**

(54) **Analytisches Verfahren zum Bestimmen von kristallographischen Phasen einer Messprobe**

Analytical method for determining crystallographic phases of a sample

Méthode analytique pour déterminer des phases cristallographiques d'un échantillon

(84) Benannte Vertragsstaaten:
**DE GB NL**

(30) Priorität: **07.10.2003  DE 10346433**

(43) Veröffentlichungstag der Anmeldung:
**13.04.2005  Patentblatt 2005/15**

(73) Patentinhaber: **Bruker AXS GmbH**
**76187 Karlsruhe (DE)**

(72) Erfinder: **Kern, Arnt, Dr.**
**76744 Wörth (DE)**

(74) Vertreter: **Kohler Schmid Möbus**
**Patentanwälte**
**Ruppmannstrasse 27**
**70565 Stuttgart (DE)**

(56) Entgegenhaltungen:
- **R.C. JONES, C.J. BABCOCK, W.B. KNOWLTON: "Estimation of the Total Amorphous Content of Hawai's Soils by the Rietveld Method" SOIL SCIENCE SOCIETY OF AMERICA JOURNAL, Bd. 64, Mai 2000 (2000-05), Seiten 1100-1108, XP002315898**
- **A. CARRERAS, R. BONETTO, G. STUTZ ET AL: "Parameter refinement in the analysis of X-ray irradiated samples" X-RAY SPECTROMETRY, Bd. 31, Nr. 2, März 2002 (2002-03), Seiten 173-177, XP002315899**
- **D. BISH ET AL: "Application of the CHEMIN XRD/XRF"[Online] 1997, XP002315900 Gefunden im Internet: URL:www.lpi.usra.edu/meetings/earlymars/pd f/3002.pdf> [gefunden am 2005-02-01]**
- **R. BONETTO, G. CASTELLANO, J. TRINCAVELLI: "Optimization of parameters in electron probe microanalysis" X-RAY SPECTROMETRY, Bd. 30, Nr. 5, September 2001 (2001-09), Seiten 313-319, XP002315901**

**Beschreibung**

Die Erfindung betrifft ein analytisches Verfahren zur Bestimmung von kristallographischen Phasen einer Messprobe, wobei ein Beugungsdiagramm der Messprobe und ein Element-Spektrum der Messprobe aufgenommen werden.

Ein solches Verfahren ist bekannt durch R. Meier und M. Dirken, International Cement & Lime Journal, Issue 2 (2002), Seite 18-21.

Mit Hilfe von Beugungsexperimenten, etwa Röntgenbeugung (=XRD), Elektronenbeugung oder Neutronenbeugung, können Informationen über kristallographische Phasen in einer Messprobe gewonnen werden. Dazu wird in der Regel ein fokussierter oder parallelisierter, meist monochromatischer Strahl von Röntgenlicht bzw. Elektronen oder Neutronen auf die Messprobe geleitet, und der abgebeugte Strahl (oder die abgebeugten Strahlen) werden von einem Detektor registriert. Aus der Lage der abgebeugten Strahlen kann auf die qualitative Zusammensetzung der Messprobe geschlossen werden, und die Intensität liefert Hinweise auf den Anteil (die Konzentration) der jeweiligen Phasen.

Sowohl die qualitative wie auch die quantitative Analyse durch Beugungsexperimente kann durch die Art der Messprobe erschwert sein. Insbesondere sind Fremdatomanteile in Kristallen (Dotierungen) im Beugungsspektrum nur schlecht erkennbar, weiterhin können amorphe Probenanteile oder Mehrfachstreuung die Analyse verfälschen.

Um die qualitative Analyse von Messproben zu erleichtern, ist es bekannt, von der Messprobe ein Elementspektrum aufzunehmen, etwa durch Röntgenfloureszenz (=XRF), vgl. R. Meier, aaO. Mit Hilfe der Elementkonzentrationen in der Probe können Phasen, die in der Probe nicht nachgewiesene chemische Elemente erfordern würden, in der qualitativen Phasenanalyse verworfen werden. Durch Hinzuziehen des Elementspektrums wird die Zuverlässigkeit der qualitativen Phasenanalyse aus dem Beugungsspektrum erhöht. Nur die in der qualitativen Phasenanalyse ausgewählten Phasen werden dann in die quantitative Phasenanalyse auf Grundlage des Beugungsspektrums einbezogen.

Bei diesem bekannten analytischen Verfahren kommt es häufig vor, dass das Ergebnis der quantitativen Phasenanalyse auf Grundlage des Beugungsdiagramms mit den aus dem Element-Spektrum bestimmten gemessenen Element-Konzentrationen quantitativ unvereinbar ist. Die Phasenanteile der kristallographischen Phasen werden aus dem Beugungsdiagramm offenbar fehlerhaft bestimmt.

In R.C. Jones et al., Soil Sci. Soc. Am. J. 64 (2000), Seiten 1100 - 1108 wird ein Verfahren zur Bestimmung des amorphen Anteils einer Erdprobe mit Hilfe der Rietveldmethode beschrieben. Von der Probe wird sowohl ein XRD-Beugungsdiagramm als auch ein XRF-Spektrum aufgenommen. Die Phasen der Probe werden quantitativ mittels der Rietveldmethode aus den Beugungsdaten bestimmt. Oxidanteile werden zunächst kristallinen Phasen zugeordnet, die übrigen Oxidanteile, soweit sie durch XRF bestimmt sind, werden der amorphen Phase zugeordnet.

A. Carreras et al., X-Ray Spectrom. 2002 (31) Seiten 173 - 177 beschreibt die Anpassung von berechneten XRF-Daten an experimentelle XRF-Daten im Rahmen eines iterativen Prozesses.

D. Bish et al., Application of the CHEMIN XRD/XRF Instrument in Analyzing Diagnostic Mineralogiies: Quantitative XRD Analysis of Aragonite and Basalt, 1997 beschreibt die Anwendung der Rietveldmethode auf XRD-Daten, unterstützt durch XRF-Daten.

Aufgabe der vorliegende Erfindung ist es demgegenüber, eine zuverlässigere quantitative Phasenanalyse einer Messprobe bereitzustellen.

Erfindungsgemäß wird diese Aufgabe gelöst durch ein analytisches Verfahren zur Bestimmung von kristallographischen Phasen einer Messprobe, das folgende Schritte umfasst:

(a) Aufnahme eines Beugungs-Diagramms der Messprobe, und qualitative Phasenanalyse anhand des gemessenen Beugungs-Diagramms;
(b) Aufnahme eines Element-Spektrums der Messprobe, und Bestimmung der gemessenen Konzentrationen von chemischen Elementen in der Messprobe aus dem aufgenommenen Element-Spektrum;
(c) Durchführen einer quantitativen Phasenanalyse der Messprobe anhand der gemessenen Intensitäten des aufgenommenen Beugungs-Diagramms unter Berücksichtigung der in Schritt (b) ermittelten Elementkonzentrationen als Randbedingung, wobei in einem iterativen Prozess eine gleichzeitige Minimierung von Differenzen zwischen berechneten und gemessenen Intensitäten des Beugungs-Diagramms und zwischen berechneten und bestimmten Elementkonzentrationen erfolgt.

Kern des erfindungsgemäßen Verfahrens ist es, in die quantitative Analyse auf Basis des Beugungs-Diagramms einen Satz von Nebenbedingungen (Randbedingungen) einzubringen, nämlich die Konzentrationen der in der Messprobe enthaltenen chemischen Elemente, welche über das Element-Spektrum bestimmt worden sind. Wird eine angenommene (d.h. vorläufig vermutete) Phasenzusammensetzung im Rahmen der quantitativen Phasenanalyse geprüft, so sind erfindungsgemäß zwei Größen zu optimieren. Aus der angenommenen Phasenzusammensetzung werden zunächst ein Beugungsdiagramm oder Teile eines Beugungsdiagramms (z.B. einzelne Reflexmaxima) berechnet, und eine erste Differenzgröße aus einem Vergleich zum gemessenen Beugungsdiagramm bestimmt. Außerdem werden aus der angenommenen Phasenzusammensetzung berechnete Elementkonzentrationen ermittelt und eine zweite Differenzgröße aus einem Vergleich zu den gemessenen Elementkonzentrationen gemäß Element-Spektrum bestimmt. Die Übereinstimmung der angenommenen Phasenzusammensetzung mit der tatsächlichen Phasenzusammensetzung der Messprobe wird nun anhand der ersten und zweiten Differenzgröße bewertet. Als Ergebnis der quantitativen Phasenanalyse wird aus einer Mehrzahl von angenommenen Phasenzusammensetzungen diejenige ermittelt, die die niedrigsten ersten und zweiten Differenzgrößen aufweist.

Die Berechnung des Beugungsdiagramms (bzw. der Teile des Beugungsdiagramms) aus der angenommenen Phasenzusammensetzung der Messprobe kann sowohl durch eine ab-initio Simulation erfolgen (etwa im Rahmen einer Rietveldanalyse), als auch eine Extrapolation eines in einer Datenbank verfügbaren Beugungsdiagramms oder Stick Patterns auf die angenommene relative Phasenkonzentration sein. Letzterer Berechnungsansatz ist schnell und auch für Phasen unbekannter atomarer Struktur einsetzbar.

Die erste und die zweite Differenzgröße können unterschiedlich gegeneinander gewichtet sein. Bevorzugt sind die beiden Differenzgrößen gleichgewichtet, so dass die Änderungen beider Differenzgrößen bei infinitesimaler Änderung eines einzelnen Phasenanteils betragsmäßig gleich groß sind. Alternativ kann erfindungsgemäß die zweite Differenzgröße so stark gewichtet werden, dass angenommene Phasenzusammensetzungen ausgeschlossen werden, die eine Abweichung der berechneten Elementkonzentration von der gemessenen Elementkonzentration größer als die Messungenauigkeit des Element-Spektrums voraussetzen. In diesem Falle wird die gemessene Elementkonzentration als wahr angesehen, und die Konzentrationen von verschiedenen kristallographischen Phasen in der Messprobe werden sehr streng korreliert.

Das erfindungsgemäße Verfahren ist besonders gut geeignet, Gemische von einer Vielzahl von Phasen quantitativ zu analysieren, bei denen die einzelnen Phasen zu einem großen Teil identische Elemente enthalten. In diesem Fall reduziert die zweite Differenzgröße als Nebenbedingung die möglichen Phasenzusammensetzungen erheblich.

Das erfindungsgemäße Verfahren kann besonders vorteilhaft mit einer Datenverarbeitungsanlage (Computer) und einem geeigneten Computerprogramm (Software) ausgeführt werden, insbesondere wobei die Datenverarbeitungsanlage an ein geeignetes Messgerät oder geeignete Messgeräte zur Aufnahme des Beugungsdiagramms und/oder des Elementspektrums der Messprobe angeschlossen ist. Daher ist erfindungsgemäß auch ein Computerprogramm zur Ausführung des erfindungsgemäßen analytischen Verfahrens Teil der vorliegenden Erfindung.

Besonders bevorzugt ist eine Verfahrensvariante, bei der in Schritt (c) eine interaktive Anpassung von Referenzdaten an beobachtete Reflexmaxima des aufgenommenen Beugungsdiagramms durchgeführt wird, insbesondere wobei die Anpassung manuell und/oder graphisch basiert ist. Beispielsweise liefert eine Software ein Stick Pattern von Reflexmaxima der angenommenen Phasen der angenommenen Phasenzusammensetzung der Messprobe vor dem Hintergrund des gemessenen Beugungsdiagramms, und ein Anwender passt die angenommene Phasenzusammensetzung dadurch an, dass er eines der Stick Patterns neu skaliert, also eine relative Konzentration einer Phase verändert. Bevorzugt werden die Stick Patterns der übrigen Phasen unter Beachtung der Nebenbedingung der Elementkonzentrationen automatisch angepasst. Durch dieses Verfahren kann der Anwender die Auswertung von Beugungs-Diagramm und Element-Spektrum überwachen und so die Messinformationen weitgehend direkt interpretieren. Alternativ sind auch voll automatisch ablaufende Verfahrensvarianten möglich.

Eine Weiterentwicklung dieser Verfahrensvariante sieht vor, dass die Anpassung mit Hilfe eines Minimierungsalgorithmus durchgeführt wird, insbesondere wobei die Größe

$$\text{Chi}^2 = \sum_{i=1}^{M} w_i [\text{Imax}_i(\text{obs}) - \text{Imax}_i(\text{calc})]^2 + \sum_{e=1}^{N} [w_e E(\text{obs}) - E(\text{calc})]^2$$

minimiert wird, mit

- $\text{Imax}_i(\text{obs})$:     Beobachtetes Reflexmaximum
- $\text{Imax}_i(\text{calc})$:     Berechnetes Reflexmaximum
- $E(\text{obs})$:     Beobachtete Elementkonzentration
- $E(\text{calc})$:     Berechnete Elementkonzentration
- $M$:     maximale Anzahl verwendeter Reflexmaxima
- $i$:     Zählvariable der Reflexmaxima
- $N$:     maximale Anzahl verwendeter Elemente
- $e$:     Zählvariable der Elemente
- $w_i$:     Wichtungsfaktor
- $w_e$:     Skalierungskonstante.

In die Minimierungsgröße gehen die Abweichungen zwischen berechnetem und beobachtetem Beugungsdiagramm ein (erste Differenzgröße) und die Abweichungen zwischen den berechneten und den gemessenen Elementkonzentrationen ein (zweite Differenzgröße). Grundsätzlich kann jedem Reflexmaximum und jedem Element ein Gewichtungsfaktor zugeordnet werden. Die Größe Chi² kann leicht voll automatisch minimiert werden, um so die Phasenzusammensetzung der Probe schnell zu bestimmen. Man beachte, dass als Zahlenwert eines Reflexmaximums bevorzugt der Scheitelwert des Intensitätsspektrums, aber auch eine integrale Intensität in einer Umgebung des Scheitelwerts verwendet werden können.

Eine andere Weiterentwicklung der Verfahrensvariante sieht vor, dass die Anpassung auf Basis sämtlicher beobachteter Messpunkte des Beugungsdiagramms der Messprobe durchgeführt wird, insbesondere mittels quantitativer Rietveldanalyse (z.B. gemäß H.M. Rietveld, Acta Cryst. 22 (1967), 151-152; H.M. Rietveld, J. Appl. Cryst. 2 (1969), 65-71) oder kristallstrukturunabhängigen "Full Pattern Matching" Methoden (z.B. gemäß Le Bail et al., Mat. Res. Bull. 23 (1988), 447-452; G.S. Pawley, J. Appl. Cryst. 14 (1981), 357-361) oder einer Kombinationen aus Rietveldanalyse und kristallstrukturunabhängigen "Full Pattern Matching" Methoden. Die Verwendung sämtlicher Messpunkte des Beugungsdiagramms stellt die quantitative Analyse auf eine breitere Basis und macht diese somit zuverlässiger, da Probleme durch Reflexüberlagerungen minimiert werden..

Diese Weiterentwicklung kann in einer Verfahrensvariante erfindungsgemäß fortgebildet werden, bei der die Anpassung mit Hilfe eines Minimierungsalgorithmus durchgeführt wird, insbesondere wobei die Größe

$$\text{Chi}^2 = \sum_{i=1}^{M} w_i [Y_i(\text{obs}) - Y_i(\text{calc})]^2 + \sum_{e=1}^{N} [w_e E(\text{obs}) - E(\text{calc})]^2$$

minimiert wird, mit

- $Y_i$(obs):     Beobachteter Messpunkt
- $Y_i$(calc):     Berechneter Messpunkt
- E(obs):     Beobachtete Elementkonzentration
- E(calc):     Berechnete Elementkonzentration
- M:     maximale Anzahl verwendeter Messpunkte
- i:     Zählvariable der Messpunkte
- N:     maximale Anzahl verwendeter Elemente
- e:     Zählvariable der Elemente
- $w_i$:     Wichtungsfaktor
- $w_e$:     Skalierungskonstante.

Ein solcher Minimierungsalgorithmus objektiviert die Bestimmung der besten Übereinstimmung zwischen berechneten und gemessenen Daten und erleichtert eine automatische Bestimmung dieser besten Übereinstimmung.

Ganz besonders bevorzugt ist eine Variante des erfindungsgemäßen Verfahrens, bei der das Beugungs-Diagramm ein Röntgenbeugungs(=XRD)-Diagramm ist und das Element-Spektrum ein Röntgenfloureszenz(=XRF)-Spektrum ist. XRD und XRF sind kostengünstig durchzuführende, zerstörungsfreie Untersuchungsverfahren und benötigen keine oder nur eine unaufwändige Probenpräparation.

In Ausgestaltung dieser Verfahrensvariante ist es vorteilhaft, wenn die XRDund die XRF-Messungen in einer kombinierten Apparatur durchgeführt werden. Dies spart gegebenenfalls Messausrüstung ein, erspart Probenwechsel bzw. verkürzt die Wege bei den Messungen. Außerdem werden die notwendigen Daten für das erfindungsgemäße Verfahren durch eine Apparatur bereitgestellt, was die Kompatibilität der Messdaten bzw. die Datenformatierung und Datenimport in einen Rechner vereinfacht.

In einer bevorzugten Verfahrensvariante werden in Schritt (a) Lösungen verworfen, die die Anwesenheit von Elementen in der Messprobe voraussetzen würden, welche im Element-Spektrum aus Schritt (b) nicht nachgewiesen sind. Dies vereinfacht die qualitative Analyse. Diese Maßnahme für eine qualitative Analyse ist aus dem Stand der Technik an sich bekannt.

Vorteilhaft ist weiterhin eine Variante des erfindungsgemäßen Verfahrens, bei der das Verfahren zur Qualitätskontrolle eingesetzt wird, insbesondere online. Aufgrund der hohen Zuverlässigkeit der erfindungsgemäßen quantitativen Analyse und der guten Automatisierbarkeit können auch strenge Qualitätsstandards zeitnah überwacht werden.

Bevorzugt sieht eine Verfahrensvariante vor, dass die Messprobe eine anorganische Probe, z.B. eine Zementprobe und/oder eine Keramikprobe und/oder eine Gesteinsprobe umfasst. Das erfindungsgemäße Verfahren ist besonders effektiv bei Proben mit hohem kristallinen Anteil einsetzbar, da dann das gemessene Beugungsdiagramm besonders viel Informationen enthält.

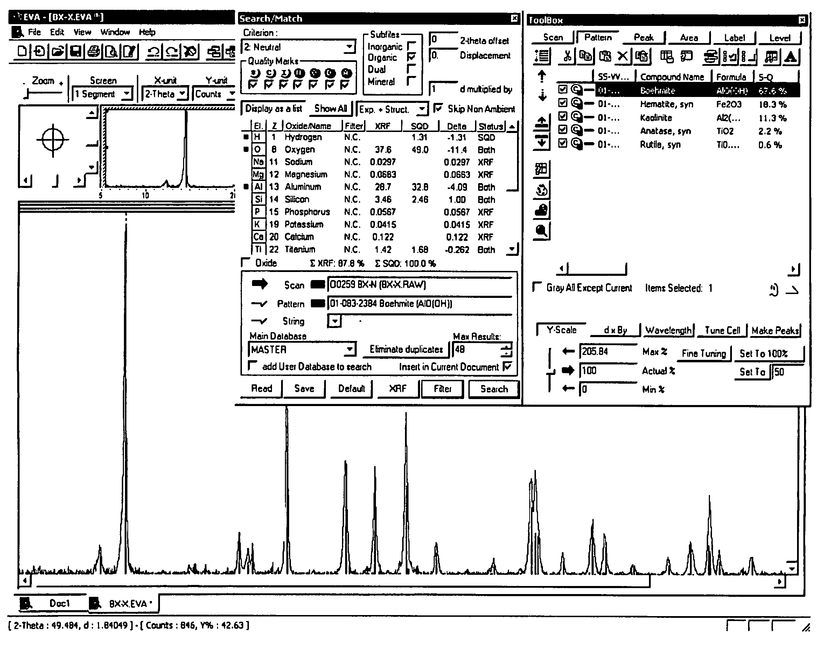

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigt die

Figur   einen Screenshot einer Software, mit der das erfindungsgemäße analytische Verfahren durchführbar ist.

Das erfindungsgemäße Verfahren beginnt zunächst mit der Aufnahme eines Elementspektrums (beispielsweise XRF) und der Aufnahme eines Beugungs-Diagramms (beispielsweise XRD) einer Messprobe. Das Ergebnis dieser beiden Messungen wird im erfindungsgemäßen Verfahren dazu verwendet, eine quantitative Konzentrationsbestimmung der in der Messprobe vorhandenen Phasen mit hoher Zuverlässigkeit und Genauigkeit durchzuführen. Vorteilhafter Weise erfolgt zumindest dieser zweite Teil des erfindungsgemäßen Verfahrens mit der Unterstützung einer Software auf einem Rechner. Diese Software kann entweder auch schon die Aufnahme des Elementspektrums und des Beugungsdiagramms gesteuert haben bzw. mit der zugehörigen Steuersoftware vernetzt sein, oder aber die Ergebnisse der Aufnahmen werden in die Software importiert, beispielsweise als Text-Dateien über eine Diskette.

Die erfindungsgemäße Auswertung der Aufnahmen erfolgt in folgenden Schritten:

1. Laden eines Beugungs-Diagramms, etwa einer XRD-Messung, in den Rechner. Weiterhin Laden eines Element-Spektrums oder von Elementkonzentrationen; letzteres Laden kann auch nach Schritt 2 erfolgen.

2. Durchführen einer qualitativen Analyse des Beugungsdiagramms, zum Beispiel mit Hilfe der PDF-Datenbank des ICDD (=international centre for diffraction data) oder einer benutzerdefinierten Datenbank. Dabei werden sogenannte Patterns (das sind Sätze von Ebenenabstände d versus Intensitäten zu einer Phase) identifiziert, die dem gemessenen Beugungsdiagramm am nächsten kommen. Die qualitative Analyse kann automatisch (Search/Match-Funktion) oder durch manuelle Selektion erfolgen, etwa wenn die kristallographischen Phasen in der Messprobe bekannt sind, beispielsweise aufgrund der Probenherstellung. Die Search-Match-Funktion kann auf Phasen eingeschränkt werden, die nur Elemente enthalten, die im Element-Spektrum nachgewiesen wurden. Auch kann der Benutzer manuell die erlaubten Elemente vorgeben.

Bevorzugt werden die in der qualitativen Analyse gefundenen Phasen als sogenannte Stick Patterns dargestellt und in das gemessene Beugungsdiagramm eingeblendet. Ein Stick Pattern umfasst dabei die Beugungsreflexe der gefundenen Phase in einem für die Phase charakteristischen Intensitätsverhältnis. Die Stick Patterns verschiedenen Phasen werden bevorzugt mit unterschiedlichen Farben dargestellt.

Die Figur zeigt in ihrem unteren Teil ein gemessenes Beugungs-Diagramm, nach rechts dargestellt der Beugungswinkel (2 thetha), und nach oben dargestellt die Intensität. Die gemessenen Reflexmaxima sind jeweils mit Linien (Sticks) unterlegt, die die Winkelposition und die Intensität der jeweiligen Reflexmaxima annähern sollen. In der Figur rechts oben befindet sich ein Fenster Tool Box, indem die aufgefundenen Phasen aufgelistet sind. Zu jeder aufgefundenen Phase gehört ein Stick Pattern (jeweils umfassend mehrere Sticks) im Beugungsdiagramm.

Im Rahmen der qualitativen Analyse kann zunächst eine Zuordnung einer absoluten Intensität zu den Stick Patterns (und damit eine Bestimmung der Konzentration der Phase in der Messprobe) unterbleiben.

Zur qualitativen Phasenanalyse vgl. auch R. Jenkins, R.L. Snyder, Introduction to X-ray Powder Diffractometry. Chemical Analysis, Vol. 138 (1996), Wiley-Intersciene.

3. Daraufhin erfolgt die quantitative Phasenanalyse, d.h. die Bestimmung des relativen Anteils der einzelnen aufgefundenen Phasen an der Messprobe. Dabei werden in einem iterativen Prozess sowohl die Differenzen zwischen berechneten und gemessenen Intensitäten des Beugungsdiagramms als auch zwischen berechneten und bestimmten Elementkonzentrationen minimiert. Am einfachsten erfolgt diese Anpassung der Phasenanteile manuell graphisch basiert.

In der Figur ist Mitte oben das Fenster Search/Match zu sehen. In diesem Fenster findet sich eine Liste von Elementen, denen ein Konzentrationswert auf Grundlage des Elementspektrums in der Liste "XRF" zugeordnet ist. In der Liste sind alle in der Probe mittels des Element-Spektrums aufgefundenen Elemente aufgeführt, sowie weiterhin Elemente, die mit dem Elementspektrum nicht zugänglich sind aber in der Probe vermutet werden (beispielsweise Wasserstoff im Falle von XRF). Daneben befindet sich eine Liste "SQD", die die Konzentrationen der Elemente - berechnet gemäß einer gegenwärtig angenommenen Zusammensetzung der Messprobe aus bestimmten Anteilen von Phasen (=angenommene Phasenzusammensetzung) - wiedergibt. In Spalte "Delta" ist die Differenz zwischen den Spalten "XRF" und "SQD" dargestellt. Konzentrationsangaben werden bevorzugt in Stoffmengen-%, alternativ auch in Gewichts-% gemacht.

Zu Beginn der Anpassung kann eine beliebige angenommene Phasenzusammensetzung eingestellt sein, bevorzugt orientiert sich die initiale angenommene Phasenzusammensetzung an den absoluten Intensitäten der Reflexmaxima im Beugungs-Diagramm. Der Benutzer kann nun den Anteil einzelner Phasen im Fenster Toolbox verändern, indem er die jeweilige Phase in der Liste markiert und mit einem Schieberegler (im Toolbox-Fenster links unten) einstellt. Die übrigen Phasen werden bevorzugt automatisch angepasst, so dass in Summe 100% Phasenanteile vergeben sind. Die jeweiligen relativen Phasenanteile können aus der Spalte "S-Q" im Toolbox-Fenster ersehen werden. Bei dieser Anpassung mit dem Schieberegler (Slider) kann der Benutzer die Differenz in den Elementkonzentrationen im Fenster Search/Match, Spalte Delta, verfolgen, und die Differenz im Beugungsdiagramm anhand der Sticklängen im Vergleich zu den gemessenen Reflexmaxima verfolgen.

Ziel des Benutzers ist eine Einstellung der angenommenen Phasenzusammensetzung der Messprobe, in der einerseits die Stick Patterns nur minimal vom gemessenen Beugungsdiagramm abweichen, d.h. die relativen Intensitäten aller Sticks aller gefundenen Phasen mit den relativen Intensitäten der entsprechenden Reflexmaxima des gemessenen Beugungsdiagramm gut übereinstimmen. Andererseits ist das Ziel der Einstellung eine möglichst geringe Abweichung der berechneten Elementkonzentrationen in der angenommenen Phasenzusammensetzung der Einstellung von den gemessenen Elementkonzentrationen gemäß Elementspektrum.

Die beiden Abweichungen können durch den Benutzer mittels Augenschein gleichzeitig minimiert werden. Zur Vereinfachung der Feststellung des Grades der Abweichungen können den beiden Abweichungen mathematisch bestimmbare Differenzgrößen zugeordnet werden. Diese Differenzgrößen können beispielsweise am Bildschirm dargestellt werden, um den Benutzer bei der Anpassung der Phasenzusammensetzung zu unterstützen. Es ist auch erfindungsgemäß möglich, einen Raum von vielen möglichen Phasenzusammensetzungen durchzurechnen und ein Minimum der Differenzgrößen automatisch zu bestimmen. Dazu kann eine gemeinsame Fehlergröße, etwa als Summe der beiden Differenzgrößen eingesetzt werden. Ein Beispiel einer gemeinsamen Fehlergröße ist Chi$^2$, wie weiter oben in der Beschreibung definiert. Dabei können die einzelnen Differenzgrößen grundsätzlich beliebig gewichtet werden. Bevorzugt wird die Übereinstimmung der berechneten und gemessenen Elementkonzentrationen streng verlangt.

Dies ist insbesondere dann sinnvoll, wenn ein amorpher Probenanteil in der Messprobe ausgeschlossen (bzw. vernachlässigt) werden kann oder ein amorpher Probenanteil im Beugungsdiagramm mit exakter Kenntnis dessen Zusammensetzung berücksichtigt wird.

In einer anderen Variante des erfindungsgemäßen analytischen Verfahrens wird aus einer angenommenen Phasenzusammensetzung der Messprobe ein vollständiges Beugungsdiagramm durch eine ab initio Rechnung auf Grundlage der atomaren Strukturen der einzelnen Phasen simuliert (=Rietveld-Methode im engeren Sinn, vgl. R.A. Young, The Rietveld Method, Oxford Science Publications, 1993). Die Übereinstimmung von simuliertem und gemessenem Beugungsdiagramm kann dann durch die Bestimmung einer Kovarianz erfolgen. Dabei werden erfindungsgemäß als angenommene Phasenzusammensetzungen von vorne herein nur solche Phasenzusammensetzungen zugelassen, die in ihrer zugehörigen elementaren Zusammensetzung den gemessenen Elementkonzentrationen gemäß dem Elementspektrum entsprechen. Dadurch wird der Raum möglicher Phasenzusammensetzungen in der Simulation erheblich eingeschränkt, so dass die Bestimmung der am besten übereinstimmenden Phasenzusammensetzung erheblich schneller erfolgen kann als ohne diese Nebenbedingung. Auch ist das Ergebnis der Rietveld-Bestimmung stets mit dem gemessenen Elementspektrum vereinbar, so dass im Ergebnis unsinnige (und damit letztlich unnötige) Rietveld-Bestimmungen ausgeschlossen sind.

**Patentansprüche**

**1.** Analytisches Verfahren zur Bestimmung von kristallographischen Phasen einer Messprobe, das folgende Schritte umfasst:

(a) Aufnahme eines Beugungs-Diagramms der Messprobe, und qualitative Phasenanalyse anhand des gemessenen Beugungs-Diagramms;
(b) Aufnahme eines Element-Spektrums der Messprobe, und Bestimmung der gemessenen Konzentrationen von chemischen Elementen in der Messprobe aus dem aufgenommenen Element-Spektrum;
(c) Durchführen einer quantitativen Phasenanalyse der Messprobe anhand der gemessenen Intensitäten des aufgenommenen Beugungs-Diagramms unter Berücksichtigung der in Schritt (b) ermittelten Elementkonzentrationen als Randbedingung,

**dadurch gekennzeichnet,**
**dass** in Schritt c) in einem iterativen Prozess eine gleichzeitige Minimierung von Differenzen zwischen berechneten und gemessenen Intensitäten des Beugungs-Diagramms und zwischen berechneten und bestimmten Elementkonzentrationen erfolgt.

2. Verfahren nach Anspruch 1, **dadurch gekennzeichnet, dass** in Schritt (c) eine interaktive Anpassung von Referenzdaten an beobachtete Reflexmaxima des aufgenommenen Beugungsdiagramms durchgeführt wird, insbesondere wobei die Anpassung manuell und/oder graphisch basiert ist.

3. Verfahren nach Anspruch 2, **dadurch gekennzeichnet, dass** die Anpassung mit Hilfe eines Minimierungsalgorithmus durchgeführt wird, insbesondere wobei die Größe

$$\text{Chi}^2 = \sum_{i=1}^{M} w_i [\text{Imax}_i(\text{obs}) - \text{Imax}_i(\text{calc})]^2 + \sum_{e=1}^{N} [w_e E(\text{obs}) - E(\text{calc})]^2$$

minimiert wird, mit

- $\text{Imax}_i(\text{obs})$:     Beobachtetes Reflexmaximum
- $\text{Imax}_i(\text{calc})$:     Berechnetes Reflexmaximum
- $E(\text{obs})$:     Beobachtete Elementkonzentration
- $E(\text{calc})$:     Berechnete Elementkonzentration
- M:     maximale Anzahl verwendeter Reflexmaxima
- i:     Zählvariable der Reflexmaxima
- N:     maximale Anzahl verwendeter Elemente
- e:     Zählvariable der Elemente
- $w_i$:     Wichtungsfaktor
- $w_e$:     Skalierungskonstante.

4. Verfahren nach einem der Ansprüche 2 oder 3, **dadurch gekennzeichnet, dass** die Anpassung auf Basis sämtlicher beobachteter Messpunkte des Beugungsdiagramms der Messprobe durchgeführt wird, insbesondere mittels quantitativer Rietveldanalyse oder kristallstrukturunabhängigen "Full Pattern Matching" Methoden oder einer Kombinationen aus Rietveldanalyse und kristallstrukturunabhängigen "Full Pattern Matching" Methoden.

5. Verfahren nach Anspruch 4, **dadurch gekennzeichnet, dass** die Anpassung mit Hilfe eines Minimierungsalgorithmus durchgeführt wird, insbesondere wobei die Größe

$$\text{Chi}^2 = \sum_{i=1}^{M} w_i [Y_i(\text{obs}) - Y_i(\text{calc})]^2 + \sum_{e=1}^{N} [w_e E(\text{obs}) - E(\text{calc})]^2$$

minimiert wird, mit

- $Y_i(\text{obs})$:     Beobachteter Messpunkt
- $Y_i(\text{calc})$:     Berechneter Messpunkt
- $E(\text{obs})$:     Beobachtete Elementkonzentration
- $E(\text{calc})$:     Berechnete Elementkonzentration
- M:     maximale Anzahl verwendeter Messpunkte
- i:     Zählvariable der Messpunkte
- N:     maximale Anzahl verwendeter Elemente
- e:     Zählvariable der Elemente
- $w_i$:     Wichtungsfaktor
- $w_e$:     Skalierungskonstante.

6. Verfahren nach einem der vorhergehenden Ansprüche, **dadurch gekennzeichnet, dass** das Beugungs-Diagramm ein Röntgenbeugungs(=XRD)-Diagramm ist und das Element-Spektrum ein Röntgenfloureszenz(=XRF)-Spektrum ist.

7. Verfahren nach Anspruch 6, **dadurch gekennzeichnet, dass** die XRD- und die XRF-Messungen in einer kombinierten Apparatur durchgeführt werden.

8. Verfahren nach einem der vorhergehenden Ansprüche, **dadurch gekennzeichnet, dass** in Schritt (a) Lösungen verworfen werden, die die Anwesenheit von Elementen in der Messprobe voraussetzen würden, welche im Element-Spektrum aus Schritt (b) nicht nachgewiesen sind.

9. Verfahren nach einem der vorhergehenden Ansprüche, **dadurch gekennzeichnet, dass** das Verfahren zur Qualitätskontrolle eingesetzt wird, insbesondere online.

10. Verfahren nach einem der vorhergehenden Ansprüche, **dadurch gekennzeichnet, dass** die Messprobe eine anorganische Probe, insbesondere eine Zementprobe und/oder eine Keramikprobe und/oder eine Gesteinsprobe umfasst.

**Claims**

1. Analytical method for determining crystallographic phases of a measuring sample, comprising the following steps:

    (a) acquisition of a diffraction pattern of the measuring sample and qualitative phase analysis on the basis of the measured diffraction pattern;
    (b) acquisition of an element spectrum of the measuring sample and determination of the measured concentrations of chemical elements in the measuring sample from the acquired element spectrum;
    (c) carrying out a quantitative phase analysis of the measuring sample on the basis of the measured intensities of the acquired diffraction pattern thereby taking into consideration the element concentrations determined in step (b) as a boundary condition,

    **characterized in**
    **that** in step c) in an iterative process, the differences between calculated and measured intensities of the diffraction pattern and between calculated and determined element concentrations are simultaneously minimized.

2. Method according to claim 1, **characterized in that,** in step (c), interactive adjustment of reference data to observed reflex maxima of the acquired diffraction pattern is carried out, wherein the adjustment is preferably carried out manually and/or graphically.

3. Method according to claim 2, **characterized in that** the adjustment is carried out by means of a minimizing algorithm, in particular wherein the value

$$\mathrm{Chi}^2 = \sum_{i=1}^{M} w_i [\mathrm{Imax}_i(\mathrm{obs}) - \mathrm{Imax}_i(\mathrm{calc})]^2 + \sum_{e=1}^{N} [w_e E(\mathrm{obs}) - E(\mathrm{calc})]^2$$

is minimized, wherein

    - $\mathrm{Imax}_i(\mathrm{obs})$:     observed reflex maximum
    - $\mathrm{Imax}_i(\mathrm{calc})$:     calculated reflex maximum
    - $E(\mathrm{obs})$:     observed element concentration
    - $E(\mathrm{calc})$:     calculated element concentration
    - M:     maximum number of reflex maxima used
    - i:     count variable of the reflex maxima
    - N:     maximum number of elements used
    - e:     count variable of the elements
    - $w_i$:     weighting factor
    - $w_e$:     scaling constant.

4. Method according to any one of the claims 2 or 3, **characterized in that** the adjustment is carried out on the basis of all observed measuring points in the diffraction pattern of the measuring sample, in particular, through quantitative Rietveld analysis or crystal-structure independent "full pattern matching" methods or a combination of Rietveld analysis and crystal-structure independent "full pattern matching" methods.

**5.** Method according to claim 4, **characterized in that** the adjustment is carried out by means of a minimizing algorithm, in particular wherein the value

$$\text{Chi}^2 = \sum_{i=1}^{M} w_i [Y_i(\text{obs}) - Y_i(\text{calc})]^2 + \sum_{e=1}^{N} [w_e E(\text{obs}) - E(\text{calc})]^2$$

is minimized, wherein:

- $Y_i(\text{obs})$:     observed measuring point
- $Y_i(\text{calc})$:     calculated measuring pint
- $E(\text{obs})$:     observed element concentration
- $E(\text{calc})$:     calculated element concentration
- M:     maximum number of measuring points used
- i:     count variable of the measuring points
- N:     maximum number of elements used
- e:     count variable of the elements
- $w_i$:     weighting factor
- $w_e$:     scaling constant.

**6.** Method according to any one of the preceding claims, **characterized in that** the diffraction pattern is an X-ray diffraction (XRD) diagram and the element spectrum is an X-ray fluorescence (XRF) spectrum.

**7.** Method according to claim 6, **characterized in that** the XRD and XRF measurements are carried out in a combined apparatus.

**8.** Method according to any one of the preceding claims, **characterized in that,** in step (a), solutions are rejected which would require the presence of elements in the measuring sample which are not detected in the element spectrum of step (b).

**9.** Method according to any one of the preceding claims, **characterized in that** the method is used for quality control, in particular online.

**10.** Method according to any one of the preceding claims, **characterized in that** the measuring sample comprises an inorganic sample, in particular, a concrete sample and/or a ceramic sample and/or a rock sample.

## Revendications

**1.** Méthode analytique pour déterminer les phases cristallographiques d'un échantillon à mesurer, laquelle comprend les étapes suivantes :

(a) enregistrement d'un diagramme de diffraction de l'échantillon à mesurer et analyse qualitative de phases à l'aide du diagramme de diffraction mesuré ;
(b) enregistrement d'un spectre élémentaire de l'échantillon à mesurer et détermination des concentrations mesurées d'éléments chimiques dans l'échantillon à mesurer à partir du spectre élémentaire enregistré;
(c) exécution d'une analyse qualitative de phases de l'échantillon à mesurer à l'aide des intensités mesurées du diagramme de diffraction enregistré en tenant compte des concentrations élémentaires déterminées à l'étape (b) comme condition limite,

**caractérisée en ce**
**qu'**à l'étape (c), dans un processus itératif, on effectue une minimalisation simultanée des différences entre intensités calculées et mesurées du diagramme de diffraction et entre concentrations élémentaires calculées et mesurées.

**2.** Méthode selon la revendication 1, **caractérisée en ce qu'**à l'étape (c), on effectue une adaptation interactive de données de référence à des maxima de réflexion observés du diagramme de diffraction enregistré, l'adaptation étant en particulier manuelle et/ou basée sur graphique.

3. Méthode selon la revendication 2, **caractérisée en ce que** l'adaptation est effectuée à l'aide d'un algorithme de minimalisation, la grandeur

$$Chi^2 = \sum_{i=1}^{M} w_i \left[\operatorname{Im} ax_i(obs) - \operatorname{Im} ax_i(calc)\right]^2 + \sum_{e=1}^{N} \left[w_e E(obs) - E(calc)\right]^2$$

étant minimalisée en particulier, avec

- Imax$_i$(obs) : maximum de réflexion observé
- Imax$_i$(calc) : maximum de réflexion calculé
- E(obs) : concentration élémentaire observée
- E(calc) : concentration élémentaire calculée
- M : nombre maximum de maxima de réflexion utilisés
- i : variable de comptage des maxima de réflexion
- N : nombre maximum d'éléments utilisés
- e : variable de comptage des éléments
- w$_i$ : facteur de pondération
- w$_e$ : constante d'échelle.

4. Méthode selon l'une des revendications 2 ou 3, **caractérisée en ce que** l'adaptation est effectuée sur la base de tous les points de mesure observés du diagramme de diffraction de l'échantillon à mesurer, en particulier au moyen d'une analyse quantitative de Rietveld ou de méthodes de « Full Pattern Matching » indépendantes de la structure cristalline ou d'une combinaison d'analyse de Rietveld et de méthodes de « Full Pattern Matching » indépendantes de la structure cristalline.

5. Méthode selon la revendication 4, **caractérisée en ce que** l'adaptation est effectuée à l'aide d'un algorithme de minimalisation, la grandeur

$$Chi^2 = \sum_{i=1}^{M} w_i \left[Y_i(obs) - Y_i(calc)\right]^2 + \sum_{e=1}^{N} \left[w_e E(obs) - E(calc)\right]^2$$

étant minimalisée en particulier, avec

- Y$_i$(obs) : point de mesure observé
- Y$_i$(calc) : point de mesure calculé
- E(obs) : concentration élémentaire observée
- E(calc) : concentration élémentaire calculée
- M : nombre maximum de points de mesure utilisés
- i : variable de comptage des points de mesure
- N : nombre maximum d'éléments utilisés
- e : variable de comptage des éléments
- w$_i$ : facteur de pondération
- w$_e$ : constante d'échelle.

6. Méthode selon l'une des revendications précédentes, **caractérisée en ce que** le diagramme de diffraction est un diagramme de diffraction de rayons X (= XRD) et le spectre élémentaire un spectre de fluorescence X (= XRF).

7. Méthode selon la revendication 6, **caractérisée en ce que** les mesures XRD et XRF sont effectuées dans un appareillage combiné.

**8.** Méthode selon l'une des revendications précédentes, **caractérisée en ce qu'**à l'étape (a) on rejette les solutions qui supposeraient la présence dans l'échantillon à mesurer d'éléments qui ne sont pas décelés dans le spectre élémentaire de l'étape (b).

**9.** Méthode selon l'une des revendications précédentes, **caractérisée en ce que** la méthode est utilisée pour le contrôle de qualité, en particulier en ligne.

**10.** Méthode selon l'une des revendications précédentes, **caractérisée en ce que** l'échantillon à mesurer est un échantillon anorganique, en particulier un échantillon de ciment et/ou un échantillon de céramique et/ou un échantillon de roche.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. MEIER ; M. DIRKEN.** *International Cement & Lime Journal,* 2002, vol. 2, 18-21
- **R.C. JONES et al.** *Soil Sci. Soc. Am. J.,* 2000, vol. 64, 1100-1108
- **A. CARRERAS et al.** *X-Ray Spectrom.,* 2002, vol. 31, 173-177
- **D. BISH et al.** Application of the CHEMIN XRD/XRF Instrument in Analyzing Diagnostic Mineralogiies. *Quantitative XRD Analysis of Aragonite and Basalt,* 1997
- **H.M. RIETVELD.** *Acta Cryst.,* 1967, vol. 22, 151-152
- **H.M. RIETVELD.** *J. Appl. Cryst.,* 1969, vol. 2, 65-71
- **LE BAIL et al.** *Mat. Res. Bull.,* 1988, vol. 23, 447-452
- **G.S. PAWLEY.** *J. Appl. Cryst.,* 1981, vol. 14, 357-361
- Introduction to X-ray Powder Diffractometry. **R. JENKINS ; R.L. SNYDER.** Chemical Analysis. Wiley-Intersciene, 1996, vol. 138
- **R.A. YOUNG.** The Rietveld Method. Oxford Science Publications, 1993